(19) Europäisches Patentamt
European Patent Office
Office européen des brevets

(11) Veröffentlichungsnummer: **0 548 641 B1**

# (12) EUROPÄISCHE PATENTSCHRIFT

(45) Veröffentlichungstag der Patentschrift: **06.09.95**

(51) Int. Cl.[6]: **C08F 8/32**, C08F 8/48

(21) Anmeldenummer: **92120784.1**

(22) Anmeldetag: **05.12.92**

## (54) Poly(meth)acrylimide.

(30) Priorität: **21.12.91 DE 4142575**

(43) Veröffentlichungstag der Anmeldung:
**30.06.93 Patentblatt 93/26**

(45) Bekanntmachung des Hinweises auf die Patenterteilung:
**06.09.95 Patentblatt 95/36**

(84) Benannte Vertragsstaaten:
**BE DE FR GB NL**

(56) Entgegenhaltungen:
**EP-A- 0 366 933**
**WO-A-91/09886**
**US-A- 4 246 374**

**PATENT ABSTRACTS OF JAPAN vol. 10, no. 71 (C-334)(2128) 20. März 1986**

(73) Patentinhaber: **BASF Aktiengesellschaft**
**Carl-Bosch-Strasse 38**
**D-67063 Ludwigshafen (DE)**

(72) Erfinder: **Besecke, Siegmund, Dr., p.A. Erich Besecke**
**Niborgstrasse 11**
**W-3250 Hameln (DE)**
Erfinder: **Deckers, Andreas, Dr.**
**Eschenbachstrasse 48**
**W-6700 Ludwigshafen (DE)**
Erfinder: **Loth, Wolfgang, Dr.**
**Weinstrasse Sued 58**
**W-6702 Bad Duerkheim (DE)**
Erfinder: **Lauke, Harald, Dr.**
**Sophienstrasse 10**
**W-6800 Mannheim 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Polymerisat, enthaltend im wesentlichen Einheiten der Formel I

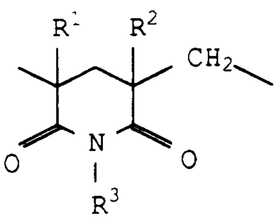

I

in der

$R^1$ und $R^2$ für Wasserstoff oder Methyl stehen und

$R^3$ $C_4$-$C_{18}$-Alkyl, $C_5$-$C_8$-Cycloalkyl, $C_6$-$C_{10}$-Aryl, $C_6$-$C_{10}$-Aryl-$C_1$-$C_4$-alkyl bedeutet, wobei diese Reste mit Ausnahme der $C_4$-$C_{18}$-Alkylreste bis zu dreifach mit Resten ausgewählt aus der Gruppe bestehend aus $C_1$-$C_4$-Alkyl, $C_1$-$C_4$-Alkoxy und Halogen substituiert sein können,

mit einem Gehalt an Carboxyl- und Anhydrid-Gruppen von kleiner oder gleich 0,40 Äquivalenten pro Kilogramm Polymer und einer Eigenfarbe (gemessen als Gelbindex) von kleiner oder gleich 2,0, erhältlich durch Umsetzen eines Polymeren auf Basis von $C_1$-$C_{20}$-Alkylestern der (Meth)Acrylsäure mit einem primären Amin der allgemeinen Formel II

$R^3NH_2$ II

indem man den während der Umsetzung entstehenden Alkohol aus dem Reaktionsgemisch entfernt.

Ferner betrifft die Erfindung ein Verfahren zur Herstellung dieser Polymerisate, deren Verwendung zur Herstellung von thermoplastischen Formkörpern sowie Formkörper aus diesen Polymerisaten.

Polymere auf Basis von $C_1$-$C_{20}$-Alkylestern der (Meth)Acrylsäure, deren häufigste Vertreter Methylmethacrylat und Methylacrylat sind, zeichnen sich durch eine hervorragende Transparenz und Witterungsstabilität aus. Aus diesen Gründen verwendet man Polymethylmethacrylate ("PMMA") beispielsweise für die Herstellung optisch anspruchsvoller Teile wie Linsen sowie für Lampenabdeckungen.

Für eine ganze Reihe von Anwendungen besitzen solche Acrylat-Formmassen jedoch eine zu geringe Wärmeformbeständigkeit. Eine der möglichen Lösungen besteht in der Erhöhung der Glasübergangstemperatur durch polymeranaloge Umsetzung beispielsweise von PMMA mit primären Aminen (Imidierung) unter Ausbildung cyclischer Imidstrukturen (s. Gl.1):

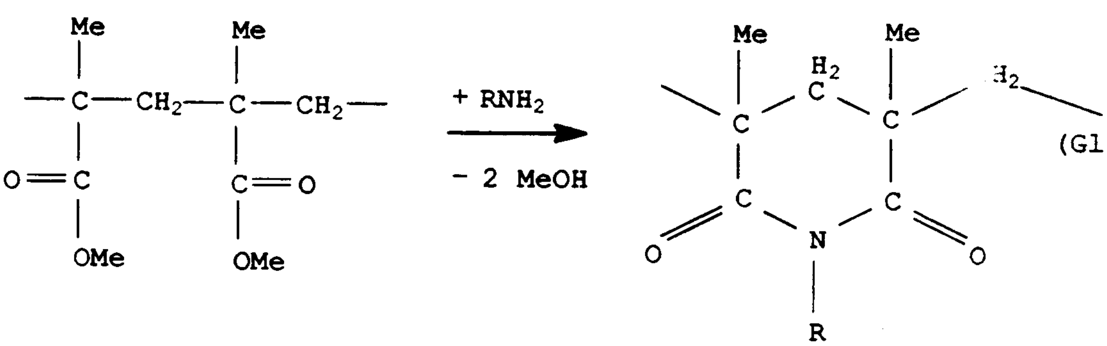


(Gl. 1)

Die Imidierung von PMMA in wäßrigem Milieu führt wie bekannt (s. z.B. EP-A 376,749, S. 6, Z. 21-26) aufgrund der im Endprodukt vorhandenen freien Carboxyl-Gruppen zu einer verringerten Fließfähigkeit des Polymeren sowie zu einer erhöhten Wasseraufnahme, zu einer größeren Neigung zur Spannungsrißkorrosion und zu einer Verringerung der Bewitterungsbeständigkeit.

Die Imidierung von PMMA in wasserfreiem Milieu wird z.B. in der US-A 2,146,209 beschrieben, in der die Umsetzung in Lösungsmitteln wie Biphenyl und Diethylenglykol durchgeführt wird. Abgesehen von der Toxizität (Biphenyl) und dem großen Aufwand, die Lösungsmittel aufgrund ihrer hohen Siedepunkte zu

entfernen, erhält man nach diesem Verfahren uneinheitlich imidierte Produkte mit verringerter Transparenz und einer gelben Eigenfarbe.

In der EP-B 234,726 wird ein Verfahren zur Umsetzung von Methacrylpolymeren mit wasserfreien Aminen in Gegenwart eines Lösungsmittelgemisches (Aromat/Alkohol) bei Temperaturen bis zu 350 °C beschrieben.

Unter diesen Bedingungen wird jedoch ein Teil des primären Amins vom Alkohol unter Wasserabspaltung alkyliert. Das freigewordene Reaktionswasser führt anschließend wiederum zu einer Verseifung von Carboxylat-Gruppen und somit zu einer Erhöhung der Säurezahl. Ein weiterer Nachteil besteht gemäß der EP-A 318,197 darin, daß eine Alkylierung des eingesetzten Amins eintritt, das dann nicht mehr zur Imidierung zur Verfügung steht. Vielmehr wird hierdurch die Ausbildung von Anhydridstrukturen, die wiederum leicht verseift werden können, katalysiert. Außerdem werden die Selektivität und die Wirtschaftlichkeit dieses Verfahrens durch den Verlust an primärem Amin herabgesetzt.

Ähnlich verhält es sich bei dem in der US-A 4,246,374 beschriebenen Prozeß, bei dem PMMA lösungsmittelfrei auf einem Extruder imidiert wird. Jedoch bildet sich auch hier durch die hohe Reaktionstemperatur Reaktionswasser, was zu teilverseiften Polymeren mit Säurezahlen von etwa 1 Äquivalent pro Kilogramm Polymer sowie verringerter Transparenz führt. Einen weiteren Nachteil bilden Nebenprodukte wie Ether und Di- und Trialkylamine.

Verfahren zur Verminderung der Säurezahl von Polymethacrylimiden sind ebenfalls bekannt. So wird in der EP-A 216,505 die Rückveresterung freier Carboxyl-Gruppen mit Alkylierungsmitteln wie Trimethylorthoformiat beschrieben. Nachteilig ist hier der mit einem 2-stufigen (Extruder)-Verfahren verbundene Aufwand an Zeit und Material.

Der Erfindung lag daher die Aufgabe zugrunde, Poly(meth)acrylimide mit einer verminderten Säurezahl und einem verbesserten Gelbindex zur Verfügung zu stellen.

Demgemäß wurden die eingangs definierten Polymerisate gefunden.

Außerdem wurden ein einstufiges Verfahren zur Herstellung dieser Polymerisate, deren Verwendung zur Herstellung von Formkörpern sowie Formkörper, erhältlich aus diesen Polymerisaten, gefunden.

Unter den Polymerisaten auf Basis von $C_1$-$C_{20}$-Alkylestern der (Meth)Acrylsäure sind sowohl Homo- als auch Copolymere zu verstehen, wobei die Copolymeren noch andere ethylenisch ungesättigte Comonomere enthalten können.

Als $C_1$-$C_{20}$-Alkylester der Methacrylsäure kommen bevorzugt die $C_1$-$C_4$-Alkylester wie Methylmethacrylat ("MMA"), Ethylmethacrylat, Propylmethacrylat, n-Butylmethacrylat, Isobutylmethacrylat und tert.-Butylmethacrylat in Betracht, wobei Methylmethacrylat besonders bevorzugt ist, sowie Mischungen dieser Monomeren.

Als $C_1$-$C_{20}$-Alkylester der Acrylsäure verwendet man bevorzugt die $C_1$-$C_4$-Alkylester wie Methylacrylat ("MA"), Ethylacrylat, Propylacrylat, n-Butylacrylat, Isobutylacrylat und tert.-Butylacrylat, wobei Methylacrylat besonders bevorzugt ist, sowie Mischungen dieser Monomeren.

Als ethylenisch ungesättigte Comonomere kann man Acrylsäure, Methacrylsäure, Maleinsäurederivate wie das Anhydrid, Imide und $C_1$-$C_{10}$-Alkylester, Itaconsäurederivate wie Imide und $C_1$-$C_{10}$-Alkylester, Acryl- und Methacrylnitril, Styrol, $\alpha$-Methylstyrol, Ethylen, Propylen und Butadien sowie Mischungen davon, verwenden.

Die Polymerisate können ein- oder mehrstufig hergestellt werden, wobei bei mehrstufiger Polymerisation wenigstens die äußere Stufe Gruppen enthalten muß, die imidiert werden können.

Im allgemeinen sind die Polymerisate zu mehr als 50, bevorzugt zu mehr als 80 Gew.-% aus $C_1$-$C_{20}$-Alkylestern der Methacrylsäure und Acrylsäure aufgebaut. Als besonders vorteilhaft haben sich nach bisherigen Beobachtungen Polymerisate aus 80 bis 100 Gew.-% Methylmethacrylat und 0 bis 20 Gew.-% Methylacrylat in einem Molekulargewichtsbereich ($M_w$) von 20.000 bis 300.000 g/mol erwiesen.

Als primäres Amin, $R^3NH_2$, verwendet man eines ausgewählt aus der Gruppe bestehend aus $C_4$-$C_{18}$-Alkylamin, $C_5$-$C_8$-Cycloalkylamin, $C_6$-$C_{10}$-Arylamin und $C_6$-$C_{10}$-Aryl-$C_1$-$C_4$-alkylamin, wobei die Cycloalkyl-, Aryl- und Arylalkyl-Bestandteile der Amine bis zu dreifach mit Resten ausgewählt aus der Gruppe bestehend aus $C_1$-$C_4$-Alkyl, $C_1$-$C_4$-Alkoxy und Halogen wie Fluor, Chlor und Brom substituiert sein können.

Beispielhaft seien genannt n-Butylamin, 1-Methylpropylamin, 2-Methylpropylamin, 1,1-Dimethylethylamin, n-Pentylamin, 1-Methylbutylamin, 2-Methylbutylamin, 3-Methylbutylamin, 2-Dimethylpropylamin, 1-Ethylpropylamin, n-Hexylamin, n-Heptylamin, n-Octylamin, n-Nonylamin, n-Decylamin, n-Undecylamin, n-Dodecylamin, Stearylamin, Cyclopentylamin, Cyclohexylamin, Cycloheptylamin, Cyclooctylamin, Anilin, 2-, 3-, 4-Methylanilin, 2-, 3-, 4-Methoxyanilin, 2-, 3-, 4-Chloranilin, 2-, 3-, 4-Bromanilin, Benzylamin, Phenethylamin und Phenylpropylamin, besonders bevorzugt Cyclohexylamin.

Wesentlich für die Erfindung ist es, daß man den durch die Aminolyse der Estergruppen entstandenen Alkohol aus dem Reaktionsgemisch entfernt. Besonders vorteilhaft kann man dies durch kontinuierliches

Abdestillieren des Alkohols erreichen. Hierzu ist es zweckmäßig, daß man für die Imidierung ein Amin verwendet, das einen höheren Siedepunkt aufweist als der aus dem Reaktionsgemisch zu entfernende Alkohol, so daß keine oder nur unwesentliche Mengen Amin mitentfernt werden.

Prinzipiell kann man auch Amine mit gleichem oder niedrigerem Siedepunkt als der Siedepunkt des abzudestillierenden Alkohols einsetzen, indem man das mitentfernte Amin beispielsweise durch weitere Destillation vom Alkohol abtrennt und wieder in das Reaktionsgemisch einbringt. Jedoch wird die hier vorgeschlagene Variante (Siedepunkt Amin > Siedepunkt Alkohol) aufgrund der einfacheren Reaktionsführung bevorzugt.

Die Reaktion führt man in der Regel so durch, daß man eine Mischung bestehend aus Acrylat-Polymer und Amin bevorzugt in einem Lösungsmittel unter Sauerstoffausschluß zum Sieden erhitzt und den während der Reaktion entstehenden Alkohol durch Destillation kontinuierlich aus dem Reaktionsgemisch entfernt.

Das Amin kann man dabei gleich zu Beginn der Reaktion vorlegen oder beispielsweise kontinuierlich in dem Maße wie es verbraucht wird zugeben.

Das Gewichtsverhältnis von eingesetztem Amin zu Acrylat-Polymer wählt man im allgemeinen im Bereich von 1:1 bis 400:1, bevorzugt von 1:1 bis 200:1.

Als Lösungsmittel kann man prinzipiell alle aprotischen, polaren Lösungsmittel wie
N,N'-disubstituierte, cyclische oder acyclische Carbonsäureamide wie Dimethylformamid, Diethylformamid, Dimethylacetamid, Diethylacetamid
N-Methyl-2-pyrrolidon, N-Ethyl-2-pyrrolidon
N,N,N',N'-tetrasubstituierte, cyclische oder acyclische Harnstoffe wie Tetramethylharnstoff
N-substituierte, cyclische oder acyclische (Poly)Amine wie Dicyclohexylmethylamin, Dimethylcyclohexylamin, N,N,N',N'-Tetramethylethylendiamin,N,N,N',N'-Tetramethylhexamethylendiamin
Ether wie Ethylenglykoldimethylether, Diethylenglykoldimethylether
Alkylencarbonate wie Ethylencarbonat, Propylencarbonat
sowie andere übliche aprotische und polare Lösungsmittel wie Nitroalkane wie Nitromethan, Dimethylsulfoxid, Diphenylsulfoxid und Sulfolan verwenden, wobei N-Methylpyrrolidon bevorzugt ist.

Das Gewichtsverhältnis von verwendetem Lösungsmittel zu Polymer liegt in der Regel im Bereich von 1:1 bis 100:1, bevorzugt 1:1 bis 10:1.

Die Reaktionstemperatur wählt man im allgemeinen im Bereich von 100 bis 280 °C, bevorzugt im Bereich von 120 bis 220 °C.

Der Reaktionsdruck ist in der Regel unkritisch. Man arbeitet im allgemeinen im Bereich von 80 bis 250 kPa, bevorzugt unter Atmosphärendruck.

Die Wahl des pH-Bereiches ist ebenfalls unkritisch und liegt wegen des eingesetzten Amins in der Regel oberhalb von 7.

Die Reaktionszeit liegt in der Regel im Bereich von 1 bis 20 h, bevorzugt 1 bis 10 h.

Desweiteren kann man dem Reaktionsgemisch Katalysatoren in Mengen im Bereich von 0,01 bis 10 Gew.-%, bezogen auf das eingesetzte Polymer, zur Beschleunigung der Reaktion zusetzen. Beispielhaft seien genannt
tertiäre Amine wie Tricyclohexylamin,
substituierte Guanidine wie 1,1,3,3-Tetramethylguanidin, 1,3-Diphenylguanidin
tetrasubstituierte Alkylammoniumverbindungen wie Trimethylstearylammoniumchlorid
organische Titanverbindungen wie Tetrapropoxytitan, Tetrabutoxytitan
organische Zinnverbindungen wie Dibutylzinnoxid, Dibutylzinndidodecanat
aromatische Amine wie Chinolin, Isochinolin, 4-Benzylpyridin, 4-Phenylpyridin, 2-Hydroxypyridin, 1,3-, 1,4- und 2,3-Benzodiazin, 2,2'-, 2,3'- und 2,4'-Bipyridyl,
Imide wie N,N'-Dicyclohexylcarbodiimid
sowie Antimontrioxid, Zinndioxid, Natriumamid, Natrium- und Kaliumalkoholate wie Natrium- und Kaliummethanolat, Ammoniumchlorid und Ammoniumiodid.

Das erfindungsgemäße Poly(meth)acrylimid kann man nach üblichen Methoden verarbeiten, z.B. durch Spritzguß, Extrusion oder Sintern zur Herstellung von Formkörpern.

Die erfindungsgemäßen Poly(meth)acrylimide und Formkörper haben den Vorteil gegenüber bekannten aus PMMA und Aminen hergestellten Polymerisaten, daß sie einen Gelbindex von ≦ 2,0 und einen Gehalt an freien Carboxyl- und/oder Anhydrid-Gruppen von ≦ 0,40 Äquivalenten pro Kilogramm Polymer aufweisen.

Mit den erfindungsgemäßen Polymerisaten lassen sich thermoplastisch verarbeitbare Formmassen mit hoher Wärmeformbeständigkeit herstellen.

Beispiele

Beispiel 1

a) In einem Reaktionsgefäß mit Füllkörperkolonne wurde eine Mischung aus 200 g PMMA (aus 99 Gew.-% MMA und 1 Gew.-% MA mit einem mittleren Molekulargewicht ($M_w$) von 115 000 g/mol), 150 g Cyclohexylamin und 600 g N-Methylpyrrolidon unter Stickstoff zum Sieden erhitzt. Nach etwa 1 h konnte Methanol am Kopf der Kolonne abgenommen werden, wobei während der nächsten 6 h so verfahren wurde, daß die Temperatur am Kolonnenkopf nicht mehr als 70°C betrug. Hierbei wurden 70 g Destillat erhalten. Anschließend wurde das im Überschuß vorhandene Amin abdestilliert und das Polymethacrylimid in Methanol ausgefällt und anschließend getrocknet.

b) Versuch a) wurde wiederholt mit dem einzigen Unterschied, daß anstelle von 6 h nur während 3 h Methanol abdestilliert wurde.

Die Ergebnisse der Qualitätsprüfungen sind Tabelle 1 zu entnehmen.

Beispiele 2 - 4

Analog zu Beispiel 1 wurden 200 g PMMA (gleiche Zusammensetzung wie in Beispiel 1) mit jeweils 1,5 mol Amin (s.Tabelle 2) bei 190°C in 600 g N-Methylpyrrolidon während 7 h umgesetzt und wie oben angegeben aufgearbeitet.

Die Ergebnisse der Qualitätsprüfungen sind Tabelle 2 zu entnehmen.

Vergleichsbeispiel 1 (analog zu EP-B 234,726)

a) In einem Autoklaven wurde eine Lösung von 200 g PMMA (gleiche Zusammensetzung wie in Beispiel 1) in 600 g Toluol/Methanol (Gew.-Verhältnis 90/10) mit 150 g Cyclohexylamin versetzt und auf 230°C erhitzt. Nach 4 h wurde abgekühlt und das gebildete Polymer in Methanol ausgefällt und anschließend getrocknet.

b) Versuch a) wurde wiederholt mit dem einzigen Unterschied, daß die Reaktionszeit statt 4 h 8 h betrug.

Die Ergebnisse der Qualitätsprüfungen sind Tabelle 1 zu entnehmen.

Vergleichsbeispiel 2 (analog zu US-A 4,246,374)

a) Auf einem Zweischneckenextruder (ZSK-40) mit gleichlaufenden, kämmenden Schnecken wurden 10 kg/h PMMA (gleiche Zusammensetzung wie in Beispiel 1) kontinuierlich bei einer Temperatur von 270°C mit 5 kg/h Cyclohexylamin umgesetzt. Die Reaktionszeit betrug dabei 0,1 h. Nach der Reaktionszone wurde die Polymerschmelze auf dem gleichen Extruder entgast und granuliert.

b) Versuch a) wurde wiederholt mit dem einzigen Unterschied, daß die Reaktionszeit statt 0,1 h 0,2 h betrug.

Die Ergebnisse der Qualitätsprüfungen sind Tabelle 1 zu entnehmen.

Die Bestimmung der Glasübergangstemperatur $T_g$ der Polymere erfolgte nach der DSC-Methode (ASTM D 3418-82) auf einem DSC-30-Gerät der Fa. Mettler.

Der Gehalt an Carboxyl- und Anhydrid-Gruppen wurde titrimetrisch bestimmt. Hierzu wurden 0,3 g Polymer in 75 ml eines 1:1 Gemisches aus Dichlormethan und Methanol gelöst und die Mischung mit einem Überschuß, bezogen auf die Carboxyl- und Anhydrid-Gruppen, eines abgemessenen Volumens einer 0,1 N Natriumhydroxid-Lösung versetzt. Anschließend wurde überschüssige Base mit 0,1 N Salzsäure bis zur Neutralität titriert, wobei der Endpunkt potentiometrisch bestimmt wurde.

Der Gehalt an Säure wurde dann aus der Differenz, in Äquivalenten, der zugefügten Base und der verbrauchten Menge Säure bestimmt, wobei der Säurewert durch Subtraktion des Lösungsmittel-Blindwertes korrigiert wurde (ermittelt durch Ausführung der Bestimmung ohne Polymer).

Die Säurezahl wurde dann als Gehalt an Säure in Äquivalenten pro Kilogramm imidisierbares Polymer berechnet.

Der $Y_i$-Gelbindex wurde gemäß DIN 6 167 an Rundscheiben (Ø = 80 mm, d = 6 mm) bestimmt.

Tabelle 1: Imidisierungsversuche mit Cyclohexylamin

| | Reakt.-Zeit [h] | N-Gehalt[1)] [%] | theor. Imid-Gehalt[2)] [%] | Säurezahl [Äquiv/kg] | $T_g$ [°C] | $Y_i$-Gelbindex -- |
|---|---|---|---|---|---|---|
| Beispiel 1 | a) 3 | 4,9 | 82 | 0,19 | 193 | 1,3 |
| | b) 6 | 5,9 | 99 | 0,34 | 215 | 1,8 |
| Vergleich 1 | a) 4 | 2,7 | 45 | 0,52 | 144 | 2,5 |
| | b) 8 | 5,0 | 84 | 0,82 | 179 | 3,2 |
| Vergleich 2 | a) 0,1 | 3,0 | 50 | 1,13 | 165 | 2,8 |
| | b) 0,2 | 5,4 | 91 | 1,09 | - | 4,1 |

1) Stickstoffgehalt aus Elementaranalyse

2) Theoretischer Imid-Gehalt berechnet aus:

$$\frac{X\ \%\ N\ (\text{aus Elementaranalyse})}{6{,}0\ \%\ N\ (\text{theor. max. Wert})} \times 100\ \%$$

Tabelle 2: Imidisierungsversuche mit Benzylamin, n-Octylamin und n-Dodecylamin

| Beispiel Nr.: | Amin | N-Gehalt[1) ] [%] | theor. Imid-Geh.[2)] [%] | Säurezahl [Äquiv/kg] |
|---|---|---|---|---|
| 2 | Benzylamin | 5,7 | 99 | 0,25 |
| 3 | n-Octylamin | 4,9 | 94 | 0,32 |
| 4 | n-Dodecylamin | 4,1 | 93 | 0,33 |

1) Stickstoffgehalt aus Elementaranalyse

2) Theoretischer Imid-Gehalt berechnet aus: $\frac{X\ \%\ N\ (\text{aus Elementaranalyse})}{Y\ \%\ N\ (\text{theor. max. Wert})} \times 100\ \%$

## Patentansprüche

**1.** Polymerisat, enthaltend im wesentlichen Einheiten der Formel I

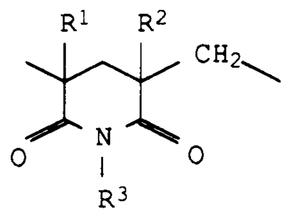

I

in der

$R^1$ und $R^2$ für Wasserstoff oder Methyl stehen und

$R^3$ $C_4$-$C_{18}$-Alkyl, $C_5$-$C_8$-Cycloalkyl, $C_6$-$C_{10}$-Aryl, $C_6$-$C_{10}$-Aryl-$C_1$-$C_4$-alkyl bedeutet, wobei diese Reste mit Ausnahme der $C_4$-$C_{18}$-Alkylreste bis zu dreifach mit Resten ausgewählt aus der Gruppe bestehend aus $C_1$-$C_4$-Alkyl, $C_1$-$C_4$-Alkoxy und Halogen substituiert sein können,

mit einem Gehalt an Carboxyl- und Anhydrid-Gruppen von kleiner oder gleich 0,40 Äquivalenten pro Kilogramm Polymer und einer Eigenfarbe (gemessen als Gelbindex) von kleiner oder gleich 2,0, erhältlich durch Umsetzen eines Polymeren auf Basis von $C_1$-$C_{20}$-Alkylestern der (Meth)Acrylsäure mit einem primären Amin der allgemeinen Formel II

$R^3NH_2$ II

indem man den während der Umsetzung entstehenden Alkohol aus dem Reaktionsgemisch entfernt.

**2.** Verfahren zur Herstellung eines Polymerisates gemäß Anspruch 1 durch Umsetzen eines Polymeren auf Basis von $C_1$-$C_{20}$-Alkylestern der (Meth)Acrylsäure mit einem primären Amin der allgemeinen Formel II

$R^3NH_2$ II

dadurch gekennzeichnet, daß man den während der Umsetzung entstehenden Alkohol aus dem Reaktionsgemisch entfernt.

**3.** Verwendung der Polymerisate gemäß Anspruch 1 zur Herstellung von thermoplastischen Formkörpern.

**4.** Formkörper, erhältlich aus Polymerisaten gemäß Anspruch 1.

## Claims

**1.** A polymer comprising essentially units of the formula I

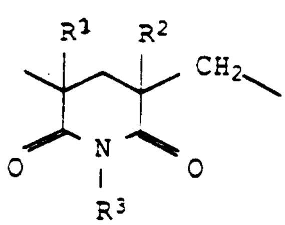

I

where

$R^1$ and $R^2$ are each hydrogen or methyl, and

$R^3$ is $C_4$-$C_{18}$-alkyl, $C_5$-$C_8$-cycloalkyl, $C_6$-$C_{10}$-aryl or $C_6$-$C_{10}$-aryl-$C_1$-$C_4$-alkyl, each of which except for the $C_4$-$C_{18}$-alkyl may be monosubstituted, disubstituted or trisubstituted by radicals selected from the group consisting of $C_1$-$C_4$-alkyl, $C_1$-$C_4$-alkoxy and halogen,

having a carboxyl and anhydride group content of equal to or less than 0.40 equivalent per kilogram of polymer and an inherent color (measured as yellowness index) of equal to or less than 2.0 and obtainable by reacting a polymer based on $C_1$-$C_{20}$-alkyl esters of (meth)acrylic acid with a primary amine of the general formula II

$R^3NH_2$ II

by removing from the reaction mixture the alcohol that forms during the reaction.

2. A process for preparing a polymer as claimed in claim 1 by reacting a polymer based on $C_1$-$C_{20}$-alkyl esters of (meth)acrylic acid with a primary amine of the general formula II

$R^3NH_2$ II

which comprises removing from the reaction mixture the alcohol that forms during the reaction.

3. The use of a polymer as claimed in claim 1 for preparing thermoplastic moldings.

4. A molding obtainable from a polymer as claimed in claim 1.

## Revendications

1. Polymères constitués des motifs essentiels de formule I

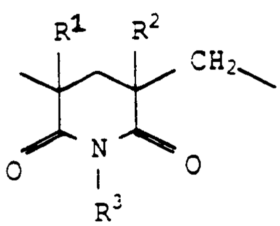

I

dans laquelle

$R^1$ et $R^2$ sont mis pour un atome d'hydrogène ou un groupement méthyle et

$R^3$ représente un groupement alkyle en $C_4$-$C_{18}$,cycloalkyle en $C_5$-$C_8$, aryle en $C_6$-$C_{10}$ ou (aryl en $C_6$-$C_{10}$)alkyle en $C_1$-$C_4$, ces restes à l'exception des groupements alkyle en $C_4$-$C_{18}$ pouvant être substitués jusqu'à trois fois par des restes choisis dans le groupe comprenant les groupements alkyle en $C_1$-$C_4$ et alcoxy en $C_1$-$C_4$ et les atomes d'halogène,

avec une teneur en groupes carboxy ou anhydride inférieure ou égale à 0,40 équivalent par kilogramme de polymère et une couleur propre (mesurée en indice de jaune) inférieure ou égale à 2,0, que l'on peut obtenir par réaction d'un polymère à base d'esters alkyliques en $C_1$-$C_{20}$ de l'acide (méth)-acrylique avec une amine primaire de formule générale II

$R^3NH_2$ II

l'alcool formé pendant la réaction étant chassé du mélange réactionnel.

2. Procédé de préparation d'un polymère selon la revendication 1, par réaction d'un polymère à base d'esters alkyliques d'acide (méth)acrylique avec une amine primaire de formule générale II

$R^3NH_2$ II

caractérisé en ce qu'on chasse du mélange réactionnel l'alcool formé pendant la réaction.

**3.** Utilisation des polymères selon la revendication 1, pour la préparation de corps moulés thermoplastiques.

**4.** Corps moulés obtenus à partir de polymères selon la revendication 1.